(19) Europäisches Patentamt / European Patent Office / Office européen des brevets

(11) **EP 2 958 245 B1**

(12) **FASCICULE DE BREVET EUROPEEN**

(45) Date de publication et mention
de la délivrance du brevet:
**01.05.2019 Bulletin 2019/18**

(51) Int Cl.:
*H04B 1/7163* (2011.01)  *H04B 1/7183* (2011.01)
*H04B 1/7075* (2011.01)  *H04B 14/04* (2006.01)
*H04L 5/00* (2006.01)

(21) Numéro de dépôt: **15172235.2**

(22) Date de dépôt: **16.06.2015**

(54) **RÉCEPTEUR UWB À POURSUITE ROBUSTE DE DÉRIVE TEMPORELLE**

UWB-EMPFÄNGER MIT STABILER NACHVERFOLGUNG DER ZEITVERSCHIEBUNG

UWB RECEIVER WITH ROBUST TRACKING OF TIME DRIFT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.06.2014 FR 1455612**

(43) Date de publication de la demande:
**23.12.2015 Bulletin 2015/52**

(73) Titulaire: **Commissariat à l'Énergie Atomique
et aux Énergies Alternatives
75015 Paris (FR)**

(72) Inventeurs:
• **Dehmas, François
38450 VIF (FR)**
• **Ouvry, Laurent
38000 GRENOBLE (FR)**
• **Pezzin, Manuel
38000 GRENOBLE (FR)**

(74) Mandataire: **Brevalex
56, Boulevard de l'Embouchure
B.P. 27519
31075 Toulouse Cedex 2 (FR)**

(56) Documents cités:
**WO-A1-2008/063132     FR-A1- 2 996 970**

• **BAUTISTA F ET AL: "Low power beamforming RF
architecture enabling fine ranging and AOA
techniques", ULTRA-WIDEBAND (ICUWB), 2011
IEEE INTERNATIONAL CONFERENCE ON, IEEE,
14 septembre 2011 (2011-09-14), pages 585-589,
XP032115737, DOI:
10.1109/ICUWB.2011.6058914 ISBN:
978-1-4577-1763-5**

**Description**

**DOMAINE TECHNIQUE**

La présente invention concerne le domaine des récepteurs UWB (*Ultra Wide Band*) et plus particulièrement la synchronisation de tels récepteurs.

**ÉTAT DE LA TECHNIQUE ANTÉRIEURE**

Les systèmes de télécommunication ultra-large bande ou UWB de type impulsionnel sont bien connus de l'état de la technique. Dans un tel système, un symbole émis par un émetteur est transmis à l'aide d'une séquence d'impulsions ultra-courtes, de l'ordre de la nanoseconde ou de la centaine de picosecondes.

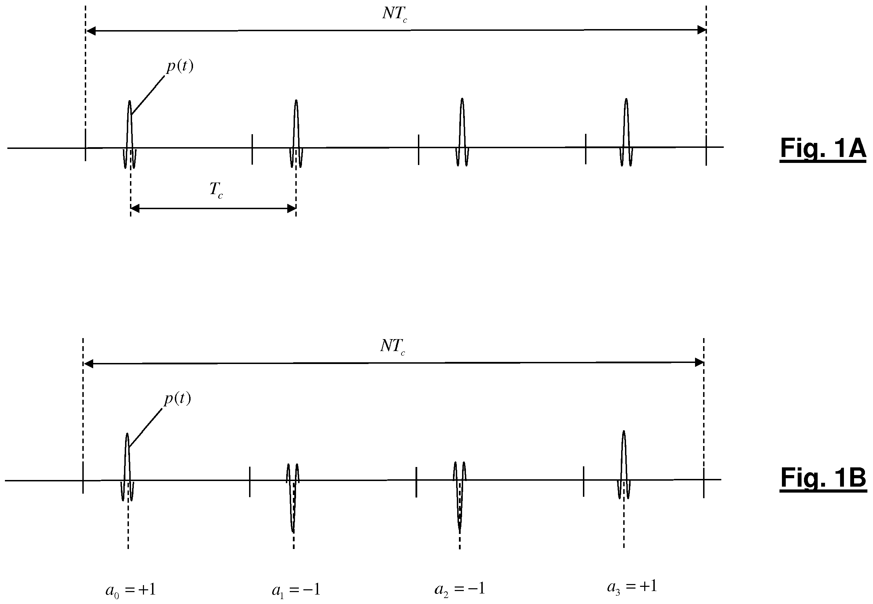

La Figure 1A illustre schématiquement le signal émis par un émetteur UWB, correspondant à un symbole d'information donné. Ce signal est constitué d'impulsions se répétant avec une période de répétition $T_c$.

Le signal émis par l'émetteur, en absence de modulation par des symboles de modulation, peut s'exprimer sous la forme suivante :

$$s_{Tx}(t) = \sum_{k=0}^{N-1} p(t - kT_c) \cos\left(2\pi f_0\left(t - kT_c\right) + \varphi_0\right) \qquad (1)$$

où $p(t)$ est la forme de l'impulsion élémentaire en bande de base, $f_0$ est la fréquence porteuse, $\varphi_0$ est la phase à l'origine, et $T_c$ est la période de répétition. La durée $\tau$ de l'impulsion élémentaire $p(t)$ est sensiblement inférieure à la durée de la période $T_c$. La période de répétition est généralement mais pas nécessairement choisie comme un multiple entier de la période de la porteuse.

Le signal UWB émis par l'émetteur peut suivre plusieurs chemins de propagation par réflexion sur l'environnement, autrement dit le canal de propagation est généralement constitué de $P$ trajets. Sa réponse impulsionnelle s'exprime alors sous la forme suivante :

$$h(t) = \sum_{p=0}^{P-1} h_p \delta\left(t - t_p\right) \qquad (2)$$

où $h_p$, $p = 1,...,P$ sont les coefficients du canal.

Le signal UWB reçu par le récepteur est le résultat de la convolution du signal émis par la réponse impulsionnelle du canal, soit :

$$s_{Rx}(t) = \sum_{k=0}^{N-1} \sum_{p=0}^{P-1} h_p p(t - t_p - kT_c) \cos\left(2\pi f_0\left(t - t_p - kT_c\right) + \varphi_0\right) + n_0(t) \qquad (3)$$

où $n_0(t)$ est le bruit au niveau du récepteur.

Le signal UWB peut être modulé pour transmettre des symboles de modulation, par exemple des symboles PAM (*Pulse Amplitude Modulation*), des symboles (D)BPSK ((*Differential*) *Binary Phase Shift Keying*), ou encore des symboles de modulation PPM (*Pulse Position Modulation*).

Le signal modulé reçu par le récepteur peut alors s'exprimer comme suit :

$$s_{Rx}(t) = \sum_{k=0}^{N-1} a_k \sum_{p=0}^{P-1} h_p p(t - t_p - kT_c) \cos\left(2\pi f_0\left(t - t_p - kT_c\right) + \varphi_0\right) + n_0(t) \qquad (4)$$

où $a_k$, $k = 0,...,N-1$ sont les symboles de modulation, PAM ou (D)BPSK. On notera que dans l'expression (4) un symbole de modulation est transmis sur une seule période de répétition.

Dans le cas d'une modulation PPM, l'expression du signal modulé prend la forme suivante :

$$s_{Rx}(t) = \sum_{k=0}^{N-1} \sum_{p=0}^{P-1} h_p p(t - t_p - kT_c - m^{(k)}\varepsilon) \cos\left(2\pi f_0\left(t - t_p - kT_c\right) + \varphi_0\right) + n_0(t) \qquad (4')$$

où $m^{(k)}$ est un symbole de modulation PPM appartenant à un alphabet PPM de $M$ positions temporelles et $\varepsilon$ est une durée élémentaire telle que $\varepsilon \ll T_c$.

A titre d'illustration, la Fig. 1B représente un exemple de signal UWB modulé par des symboles de modulation BPSK dans le cas d'un canal mono-trajet ($P = 1$).

Pour démoduler le signal reçu et récupérer les symboles de modulation, le récepteur doit poursuivre temporellement les impulsions UWB sur chacun des trajets du canal avant de les combiner à l'aide d'un filtre RAKE. En absence même de toute variation des retards $t_p$ du canal, cette poursuite temporelle est nécessaire pour compenser la dérive de synchronisation du récepteur par rapport à l'émetteur, entrainant une dérive de la fréquence de répétition des fenêtres d'intégration du récepteur par rapport à la fréquence de répétition des impulsions.

Une première méthode de synchronisation d'un récepteur sur les impulsions d'un signal UWB est décrite dans l'article de F. Salem et al. intitulé « Synchronization using an adaptive early-late algorithm for IR-TH-UWB transmission in multipath scénarios » publié dans Proc. of ISWCS, 7 Sept. 2005, pp. 267-271. Selon cette méthode de synchronisation, la poursuite est réalisée en effectuant un filtrage adapté à l'impulsion transmise et en échantillonnant la sortie du filtre adapté en trois instants successifs : un instant courant supposé correspondre au temps d'arrivée de l'impulsion (donnant un échantillon « on time »), un instant précédent (donnant un échantillon « early ») et un instant postérieur (donnant un échantillon « late »). La comparaison entre les amplitudes des échantillons « early » et « late » permet de retarder ou d'avancer l'instant courant d'échantillonnage au sein de la période de répétition.

Toutefois, l'inconvénient de cette méthode est de requérir l'emploi de trois convertisseurs analogique-numérique par trajet ainsi que des filtres adaptés analogiques.

Une seconde méthode de synchronisation d'un récepteur UWB est décrite dans la demande de brevet US-A-2004/0136468. Cette méthode effectue la poursuite temporelle des impulsions UWB à partir de la variation de phase observée entre deux symboles consécutifs. Cette méthode de synchronisation ne peut toutefois fonctionner que lorsque la fréquence de répétition est sous-multiple de la fréquence de la porteuse du signal.

Les demandes de brevet FR 2996970 A1 et WO 2008/063132 A1, ainsi que le document par BAUTISTA F ET AL: "Low power beamforming RF architecture enabling fine ranging and AOA techniques", ULTRA-WIDEBAND (ICUWB), 2011 IEEE INTERNATIONAL CONFERENCE ON, IEEE, pages 585-589 décrivent des récepteurs UWB à poursuite de dérive temporelle.

Le but de la présente invention est par conséquent de proposer un récepteur de signal UWB impulsionnel avec poursuite temporelle des impulsions, qui soit relativement simple et robuste, et ne nécessite pas d'imposer de relation particulière entre la fréquence de répétition des impulsions et la fréquence porteuse. Un autre but de la présente invention est de proposer une méthode de réception d'un signal UWB avec poursuite temporelle des impulsions, qui présente les mêmes avantages.

## EXPOSÉ DE L'INVENTION

La présente invention est définie par un récepteur UWB à poursuite de dérive temporelle, destiné à recevoir un signal UWB impulsionnel, le signal UWB impulsionnel comprenant des impulsions se succédant avec une première période de répétition ($T_c$), modulées à une fréquence porteuse, ledit signal UWB impulsionnel étant en outre modulé pour transmettre des symboles d'information, chaque symbole d'information étant transmis sur un temps-symbole ($RLT_c$) pendant lequel le symbole d'information est répété une pluralité ($R$) de fois, ledit récepteur comprenant :

- un mélangeur en quadrature pour translater en bande de base ledit signal UWB impulsionnel à l'aide d'une fréquence de translation, égale, à un offset près, à ladite fréquence porteuse ;
- un étage d'intégration du signal ainsi translaté en bande de base, pendant des fenêtres temporelles sélectionnées, chaque fenêtre temporelle sélectionnée se répétant avec une seconde période ($T_1$) ;
- un étage d'échantillonnage pour échantillonner les résultats d'intégration sur lesdites fenêtres temporelles sélectionnées et fournir pour chacune d'entre elles un échantillon complexe ;
- un module de démodulation/détection pour estimer lesdits symboles d'information à partir des échantillons complexes ainsi obtenus ;
- un estimateur de phase, pour estimer à chaque temps-symbole, la phase des échantillons complexes, débarrassés de la modulation due aux symboles d'information ainsi estimés ;
- un module de suivi de rotation de phase pour suivre d'une part la rotation de la phase ainsi estimée depuis un instant de référence et d'autre part une rotation de phase déjà compensée depuis ce même instant, et en déduire une rotation de phase non compensée;

- des moyens de contrôle appliquant un décalage temporel aux dites fenêtres temporelles pour compenser au moins une partie de ladite rotation de phase non compensée.

Avantageusement, les moyens de contrôle reçoivent la rotation de phase non compensée, $\Delta\Phi_{uc}$, et décalent les fenêtres d'intégration ainsi que les instants d'échantillonnage de $-\dfrac{\Delta\Phi_{uc}}{2\pi f_1}$, le décalage temporel étant appliqué à chaque temps-symbole.

Selon une variante, les moyens de contrôle (495) reçoivent la rotation de phase non compensée, $\Delta\Phi_{uc}$ la comparent avec une valeur de seuil $\Delta\Phi_{th}$, et lorsque $|\Delta\Phi_{uc}|$ excède la valeur de seuil, décalent les fenêtres d'intégration ainsi que les instants d'échantillonnage de $-\dfrac{\Delta\Phi_{th}}{2\pi f_1}\,\mathrm{sgn}\left(\Delta\Phi_{uc}\right)$ où $\mathrm{sgn}(\Delta\Phi_{uc})$ est le signe de $\Delta\Phi_{uc}$.

Selon un premier exemple de réalisation, l'estimateur de phase estime la phase des échantillons complexes, débarrassés de l'effet de la modulation, à partir des échantillons complexes relatifs au trajet le plus énergétique du canal de transmission.

Selon un second exemple de réalisation, l'estimateur de phase comprend un filtre RAKE cohérent pour combiner les échantillons complexes relatifs à différents trajets du canal de transmission à l'aide des coefficients complexes de ces trajets, la phase des échantillons complexes débarrassés de l'effet de la modulation étant alors estimée à partir des échantillons complexes ainsi combinés.

Selon un mode avantageux de réalisation, chaque temps-symbole contient une pluralité de symboles de modulation associés au symbole d'information transmis sur ce temps-symbole, chaque symbole de modulation étant étalé à l'aide d'un code d'étalement de longueur $L \geq 1$ pour fournir une séquence codée, chaque bribe de la séquence codée modulant une impulsion du signal UWB, le récepteur comprenant alors un étage de corrélation, corrélant les échantillons complexes avec le code d'étalement avant de les fournir au module de démodulation/détection ainsi qu'à l'estimateur de phase.

Lesdits symboles de modulation peuvent être obtenus à partir des symboles d'information répétés, au moyen d'une modulation de type PSK.

Alternativement, lesdits symboles de modulation peuvent être obtenus à partir des symboles d'information répétés, au moyen d'une modulation de type PPM.

Alternativement encore, lesdits symboles de modulation peuvent être obtenus à partir des symboles d'information répétés, au moyen d'une modulation DBPSK.

Dans ce dernier cas, l'estimateur de phase comprend avantageusement un répéteur pour répéter les symboles d'information fournis par le module de démodulation/détection, un modulateur DBPSK pour générer des symboles de modulation à partir des symboles d'information ainsi répétés, un accumulateur cohérent pour accumuler les échantillons complexes signés par les symboles de modulation successifs et un module de calcul de phase pour déterminer la phase de la somme ainsi accumulée.

En outre, dans ce cas, le module de suivi de rotation de phase peut comprendre un détecteur de franchissements des phases $(2\kappa+1)\pi/4$, $\kappa = 0,1,2,3$, le détecteur comptant les franchissements de manière algébrique, un franchissement dans le sens trigonométrique étant compté selon une première polarité et un franchissement dans le sens inverse du sens trigonométrique l'étant selon une polarité inverse de la première polarité.

Enfin, le module de démodulation/détection peut comprendre des moyens de multiplication hermitienne pour fournir le produit hermitien de chaque échantillon complexe avec l'échantillon précédent, un filtre RAKE incohérent pour combiner les produits hermitiens relatifs à différents trajets du canal de transmission, un accumulateur cohérent (830) pour accumuler les produits hermitiens combinés ainsi obtenus sur la durée d'un temps-symbole et un module de décision pour prendre, à chaque temps-symbole, une décision dure sur le symbole d'information à partir du résultat d'accumulation fourni par l'accumulateur cohérent.

De manière similaire, l'invention concerne une méthode de réception avec poursuite temporelle d'un signal UWB impulsionnel comprenant des impulsions se succédant avec une première période de répétition $(T_c)$, modulées à une fréquence porteuse, ledit signal UWB impulsionnel étant en outre modulé pour transmettre des symboles d'information, chaque symbole d'information étant transmis sur un temps-symbole $(RLT_c)$ pendant lequel le symbole d'information est répété une pluralité $(R)$ de fois, ladite méthode comprenant :

- une étape de mélange en quadrature pour translater en bande de base ledit signal UWB impulsionnel à l'aide d'une fréquence de translation, égale, à un offset près, à ladite fréquence porteuse ;

- une étape d'intégration du signal ainsi translaté en bande de base, pendant des fenêtres temporelles sélectionnées, chaque fenêtre temporelle sélectionnée se répétant avec une seconde période ($T_1$) ;
- une étape d'échantillonnage pour échantillonner les résultats d'intégration sur lesdites fenêtres temporelles et fournir pour chacune d'entre elles un échantillon complexe ;
- une étape de démodulation/détection pour estimer lesdits symboles d'information à partir des échantillons complexes ainsi obtenus ;
- une étape d'estimation de phase estimant, à chaque temps-symbole, la phase des échantillons complexes, débarrassés de la modulation due aux symboles d'information ainsi estimés ;
- un suivi de rotation de phase pour suivre d'une part la rotation de la phase ainsi estimée depuis un instant de référence et d'autre part une rotation de phase déjà compensée depuis ce même instant, et en déduire une rotation de phase non compensée ;
- une étape de contrôle des fenêtres temporelles appliquant un décalage temporel aux dites fenêtres temporelles pour compenser au moins une partie de ladite rotation de phase non compensée.

Selon un mode avantageux de réalisation, chaque temps-symbole contient une pluralité de symboles de modulation associés au symbole d'information transmis sur ce temps-symbole, chaque symbole de modulation étant étalé à l'aide d'un code d'étalement de longueur $L \geq 1$ pour fournir une séquence codée, chaque bribe de la séquence codée modulant une impulsion du signal UWB, ladite méthode comprenant en outre une étape de corrélation corrélant les échantillons complexes avec le code d'étalement avant de les fournir à l'étape de démodulation/détection et à l'étape d'estimation de phase.

## BRÈVE DESCRIPTION DES DESSINS

D'autres caractéristiques et avantages de l'invention apparaîtront à la lecture d'un mode de réalisation préférentiel de l'invention, en faisant référence aux figures jointes parmi lesquelles :

La Figure 1A, déjà décrite, représente un exemple de signal UWB de type impulsionnel ;
La Figure 1B, déjà décrite, représente un exemple de signal UWB de type impulsionnel, modulé par des symboles de modulation ;
La Fig. 2 représente schématiquement la structure d'un récepteur UWB utile à la compréhension de l'invention ;
La Fig. 3 représente un exemple du passage des symboles d'information à des super-séquences d'impulsions ;
La Fig. 4 représente schématiquement un récepteur UWB selon un mode de réalisation de l'invention ;
La Fig. 5 représente un chronogramme des fenêtres d'intégration pouvant être utilisées dans le récepteur de la Fig. 4 ;
La Fig. 6 représente schématiquement un exemple de réalisation de l'estimateur de phase dans le récepteur de la Fig. 4 ;
La Fig. 7 illustre une méthode de détection de franchissement de phase au sein du module de suivi de rotation de phase dans le récepteur de la Fig. 4 ;
La Fig. 8 représente schématiquement un exemple de réalisation du module de démodulation et de décision dans le récepteur de la Fig. 4.

## EXPOSÉ DÉTAILLÉ DE MODES DE RÉALISATION PARTICULIERS

Nous considérerons dans la suite un récepteur UWB destiné à recevoir un signal UWB de type impulsionnel.

Dans un souci de simplification de la présentation de l'invention, nous décrirons tout d'abord une méthode de synchronisation du récepteur dans le cas où le signal UWB impulsionnel est non modulé.

Comme indiqué dans la partie introductive, ce signal se présente en bande de base comme une séquence périodique d'impulsions ultra-courtes (de l'ordre d'une fraction de nanoseconde à quelques nanosecondes), séparées par une période de répétition $T_c$. Nous supposerons, dans le cas général, que le signal en bande de base est ensuite translaté en fréquence par modulation d'une porteuse à une fréquence RF, $f_0$. Aucune relation particulière n'est supposée ici entre la fréquence de répétition et la fréquence porteuse. Le signal transmis par l'émetteur est alors donné par l'expression (1) et le signal reçu par le récepteur, après propagation sur un canal de propagation multi-trajet est donné par l'expression (3).

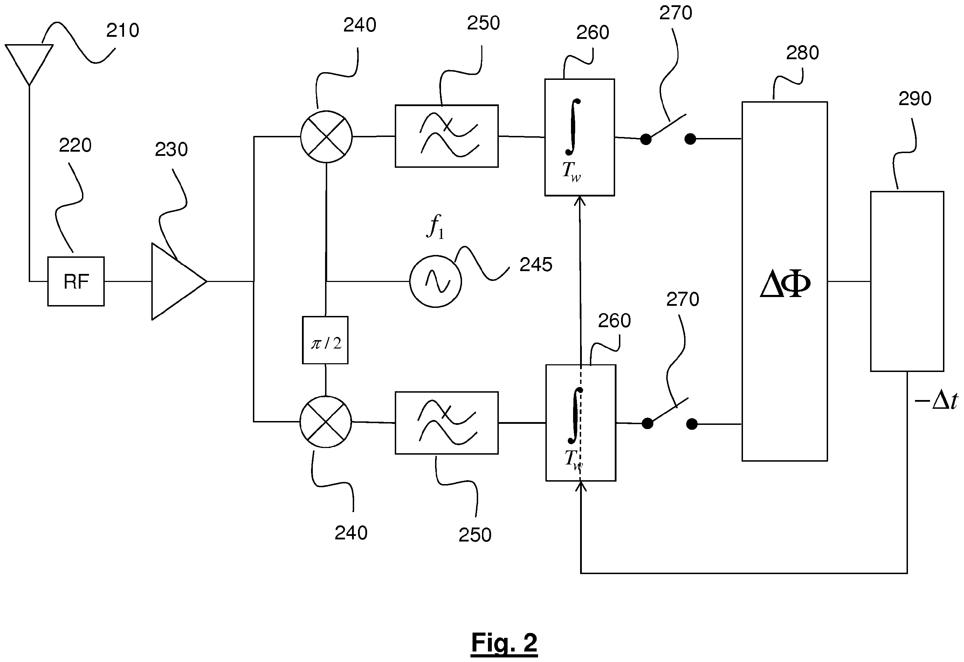

La Fig. 2 illustre de manière schématique la structure d'un récepteur UWB utile à la compréhension de l'invention.

Le signal $s_{Rx}$ reçu par l'antenne 210 est filtré par un filtre RF 220 puis amplifié par un amplificateur bas bruit (LNA), 230, avant d'être translaté en bande de base au moyen d'un mélangeur en quadrature, 240.

Le mélangeur utilise une fréquence $f_1$ fournie par l'oscillateur local 245, idéalement égale à $f_0$ mais en pratique décalée d'un offset, dû à la dérive de l'oscillateur. Les signaux en phase et en quadrature de phase sont ensuite filtrés à l'aide de filtres passe-bas (ou passe-bande) 250 puis intégrés, par un étage d'intégration 260, sur des fenêtres temporelles successives de largeur $T_w$. Les fenêtres temporelles se succèdent avec une périodicité $T_w$. Après intégration, les signaux en phase et en quadrature, sont échantillonnés à la fréquence $1/T_w$ par l'étage d'échantillonnage 270.

L'estimateur de phase 280 reçoit les échantillons successifs complexes obtenus (voies I et Q) et en déduit le décalage de phase entre deux échantillons séparés de $q$ périodes d'échantillonnage, où $qT_w \simeq T_c$.

Le récepteur comprend en outre des moyens de contrôle 290 recevant le déphasage fourni par l'estimateur de phase 280 et contrôlant la position de la fenêtre d'intégration ainsi que l'instant d'échantillonnage. Les moyens de contrôle 290 opèrent comme une boucle à verrouillage de retard (DLL) en retardant plus ou moins le début de la fenêtre d'intégration par rapport au signal reçu et, corrélativement, l'instant d'échantillonnage.

Le fonctionnement des moyens de contrôle, 290, est explicité ci-après.

Après mélange en quadrature et filtrage passe-bande, le signal complexe, avant intégration en 260, est donné par :

$$r(t) = \sum_{k=0}^{L-1}\sum_{p=0}^{P-1} h_p \, p\left(t-t_p-kT_c\right)\exp\left(j2\pi\left(f_0-f_1\right)t - j2\pi f_0\left(t_p+kT_c\right)+j\left(\varphi_0-\varphi_1\right)\right)+n_1(t)$$

$$= \sum_{k=0}^{L-1} p_r(t-kT_c)\exp\left(j2\pi\left(f_0-f_1\right)t - j2\pi f_0 kT_c + j\left(\varphi_0-\varphi_1\right)\right)+n_1(t) \tag{5}$$

où $n_1(t)$ est le bruit mélangé et filtré, $\varphi_1$ est la phase de l'oscillateur local, et en posant :

$$p_r(t) = \sum_{p=0}^{P-1} h_p \, p\left(t-t_p\right)\exp\left(-j2\pi f_0 t_p\right) \tag{6}$$

Le signal $r(t)$ est intégré pendant des fenêtres d'intégration successives de durée $T_w$. Autrement dit, le temps est découpé en fenêtres successives $W_n = [t_0+nT_w, t_0+(n+1)T_w]$ où $t_0$ est un instant donnant le point de départ de l'intégration. On comprendra qu'une variation de $t_0$ décale les fenêtres d'intégration par rapport au signal reçu.

$$r_w[n] = \int_{t_0+nT_w}^{t_0+(n+1)T_w} r(t)\,dt \,.$$

Le signal complexe après intégration dans la fenêtre $W_n$ est noté $r_w[n]$ où                Si l'on suppose que le support de $p_r(t)$ est inférieur à $T_c$, autrement dit qu'il n'y a pas d'interférence inter-impulsion due aux trajets multiples (dans le cas contraire, l'interférence peut être considérée comme une composante du bruit), la valeur $r_w[n]$ se réduit à :

$$r_w[n] = \int_{t_0+nT_w}^{t_0+(n+1)T_w} \left(p_r\left(t-k_nT_c\right)\times\exp\left(j2\pi\left(f_0-f_1\right)t - j2\pi f_0 k_n T_c + j\left(\varphi_0-\varphi_1\right)\right)+n_1(t)\right)dt \tag{7}$$

où $k_n$ est l'entier tel que $p_r(t-k_nT_c)$ n'est pas partout nulle sur la fenêtre d'intégration $W_n$ (il existe au moins un entier $k_n$ vérifiant cette propriété sur la période de répétition des impulsions). Dans la mesure où la période de répétition des impulsions, $T_c$, est de l'ordre d'un multiple de la durée de la fenêtre d'intégration ($T_c \simeq qT_w$), l'entier $k_n$ vérifiant la condition précédente est unique.

La synchronisation du récepteur nécessite de connaître l'entier $q$ tel que $T_1 = qT_w$ approche au mieux la période des impulsions, $T_c$. Si l'on a $T_1 \simeq T_c$, la configuration de recouvrement de la fonction $p_r(t)$ avec les fenêtres d'intégration se répète au bout de $q$ fenêtres, autrement dit $k_{n+q} = k_n +1$ et :

$$r_w[n+q] = \int_{t_0+nT_w}^{t_0+(n+1)T_w} \left(p_r\left(t+T_1-\left(k_n+1\right)T_c\right)\times\exp\left(j2\pi\left(f_0-f_1\right)\left(t+T_1\right) - j2\pi f_0\left(k_n+1\right)T_c + j\left(\varphi_0-\varphi_1\right)\right)\right)dt \tag{8}$$

où l'on a omis le terme de bruit.

La valeur $r_w[n+q]$ peut s'écrire de manière équivalente sous la forme :

$$r_w[n+q] = \int_{t_0+nT_w+T_1-T_c}^{t_0+(n+1)T_w+T_1-T_c} \left( p_r(t-k_nT_c) \times \exp\left( j2\pi(f_0-f_1)(t+T_c) - j2\pi f_0(k_n+1)T_c + j(\varphi_0-\varphi_1) \right) \right) dt \qquad (9)$$

On suppose que $T_1 \simeq T_c$, et plus précisément que $|T_1 - T_c| \ll T_w$, d'où:

$$r_w[n+q] \simeq \int_{t_0+nT_w}^{t_0+(n+1)T_w} \left( p_r(t-k_nT_c) \times \exp\left( j2\pi(f_0-f_1)(t+T_c) - j2\pi f_0(k_n+1)T_c + j(\varphi_0-\varphi_1) \right) \right) dt \qquad (10)$$

l'égalité étant exacte si $T_1 = T_c$ ou bien si le signal reçu est nul aux bords de la fenêtre d'intégration. Finalement, on a :

$$r_w[n+q] \simeq r_w[n] \exp(-j2\pi f_1 T_c) \qquad (11)$$

La relation (11) exprime le déphasage entre deux résultats d'intégration séparés de $q$ fenêtres d'intégration. Les résultats d'intégration sont obtenus en sortie des échantillonneurs 270 et le détecteur 280 détermine le déphasage entre échantillons séparés de $q$ périodes d'échantillonnage $T_w$ :

$$\Delta\phi = \arg\left( r_w[n+q]\, r_w^*[n] \right) = -2\pi f_1 T_c \qquad (12)$$

Si l'on note $\delta = \dfrac{T_1 - T_c}{T_1}$ l'écart relatif entre la période des impulsions, $T_c$, émises par l'émetteur et la période, $T_1$, utilisée par le récepteur et tenant compte du fait que $f_1 T_1$ est généralement un nombre entier $Q$ (la période $T_1$ est obtenue par division de fréquence d'une horloge à la fréquence $f_1$), le déphasage $\Delta\phi$ peut s'exprimer en fonction de l'écart relatif précité modulo $2\pi$ :

$$\Delta\phi = -2\pi Q\delta \quad [2\pi] \qquad (13)$$

On comprendra que le déphasage $\Delta\phi$ traduit un glissement temporel $(-\Delta\phi/2\pi Q)T_1$ des fenêtres d'intégration par rapport au signal reçu, ledit glissement temporel étant déterminé ici par le détecteur avec une périodicité $T_1$. Le glissement temporel pourra être déterminé de manière univoque, sans repliement, si $|\Delta\phi| < \pi$ c'est-à-dire $|\delta| < \dfrac{1}{2Q}$.

La synchronisation du récepteur consiste à corriger ce glissement temporel de manière à ce que les impulsions reçues ne glissent pas par rapport aux fenêtres d'intégration, autrement dit la synchronisation consiste à poursuivre temporellement les impulsions.

A cette fin, les moyens de contrôle, 290, font varier le début des fenêtres d'intégration en fonction du déphasage déterminé par le détecteur 280. Si le glissement temporel est de $\delta t = (-\Delta\phi/2\pi Q)T_1$ le début des fenêtres d'intégration sera décalé de $-\delta t = (\Delta\phi/2\pi Q)T_1$. On notera que la correction du glissement temporel par les moyens de contrôle est effectuée ici avec une périodicité $T_1$. Le cas échéant, le début des fenêtres d'intégration pourra être avancé ou retardé par multiple d'un pas temporel $\delta T_w$, l'instant d'échantillonnage étant donc avancé ou retardé d'autant.

Dans ce cas, les moyens de contrôle, 290, effectuent une accumulation des déphasages $\Delta\phi$ obtenus sur une pluralité $n_T$ de périodes $T_1$ successives :

$$\Delta\Phi = \sum_{n=0}^{n_T-1} \Delta\phi_n \qquad (14)$$

Le décalage temporel cumulé (par effet de vernier) sur $n_T$ périodes successives peut être déterminé comme précédemment par :

$$\Delta t = \left(-\Delta\Phi/2\pi Q\right)T_1 \qquad (15)$$

Avec une périodicité $n_T T_1$, les moyens de contrôle 290 calculent le glissement temporel cumulé et décalent le début des fenêtres d'intégration et les instants d'échantillonnage d'un temps $-\Delta t = (\Delta\Phi/2\pi Q)T_1$.

Alternativement, le glissement temporel peut être cumulé jusqu'à ce qu'il atteigne une période d'échantillonnage $T_w$, les fenêtres étant alors décalées de cette période.

On notera que la correction du glissement temporel est réalisée par les moyens de contrôle 290. Si le décalage est réalisé par pas multiple d'un pas temporel $\delta T_w$, la correction à appliquer est de $\left\lfloor \dfrac{\Delta t}{\delta T_w} \right\rfloor$ pas temporels où $\lfloor x \rfloor$ désigne la valeur entière de $x$.

On comprend que le récepteur de la Fig. 2 peut ainsi constamment corriger sa dérive temporelle par rapport au signal reçu. Les échantillons fournis par l'étage d'échantillonnage 270 sont alors synchrones avec les impulsions du signal reçu et peuvent être traités par le récepteur.

Il a été supposé dans l'exposé ci-dessus que le signal transmis par l'émetteur était non modulé (expression (1)).

On suppose désormais, dans le contexte de la présente invention, que le signal transmis est modulé pour transmettre des symboles d'information.

Plus précisément, chaque symbole d'information $b_i$ à transmettre sur un temps-symbole, par exemple chaque bit, est tout d'abord répété un nombre $R$ - 1 de fois où $R > 1$ (autrement dit on a une suite de $R$ symboles d'information $b_i$). Les symboles d'information ainsi répétés sont ensuite modulés à l'aide d'une modulation PSK (de préférence BPSK), DPSK (de préférence DBPSK), PAM ou encore PPM. En pratique, lorsque l'ordre de modulation (autrement dit le cardinal de l'alphabet de modulation) est de la forme $2^v$, le nombre $R$ est choisi multiple de $v$. On obtient dans tous les cas une série de symboles de modulation $a_m^{(i)}$ représentant le symbole d'information $b_i$. Les symboles de modulation peuvent ensuite être codés à l'aide d'un code spécifique à l'émetteur, dit aussi code d'étalement, ce code pouvant faire partie d'une famille de codes orthogonaux telle qu'une famille de codes de Hadamard et permettant une séparation au niveau du récepteur des signaux transmis par différents émetteurs. Ainsi, chaque symbole de modulation, $a_m^{(i)}$, est alors codé par un code $c_k$, $k = 0,....L$-1, et donne lieu à une séquence $c_k a_m^{(i)}$, $k = 0,...,L$-1 . Cette séquence module ensuite le signal UWB, les éléments de la séquence multipliant des impulsions successives du signal. La suite des séquences d'impulsions correspondant à un même symbole d'information est dénommée ci-après super-séquence. On comprendra donc qu'une super-séquence est constituée de $RL$ impulsions UWB et que cette super-séquence est transmise sur un temps-symbole. Bien que le codage des symboles de modulation ne soit pas nécessaire à la mise en oeuvre de l'invention (dans ce cas $L$ = 1), l'étalement de puissance qu'il introduit permet de réduire la puissance crête de transmission et donc de se conformer plus facilement aux contraintes de densité spectrale du gabarit UWB. En outre, il permet de séparer les signaux reçus de différents émetteurs et d'améliorer le rapport signal sur bruit plus interférence, notamment dans le cas d'une transmission à longue portée (terminal en frontière de cellule par exemple).

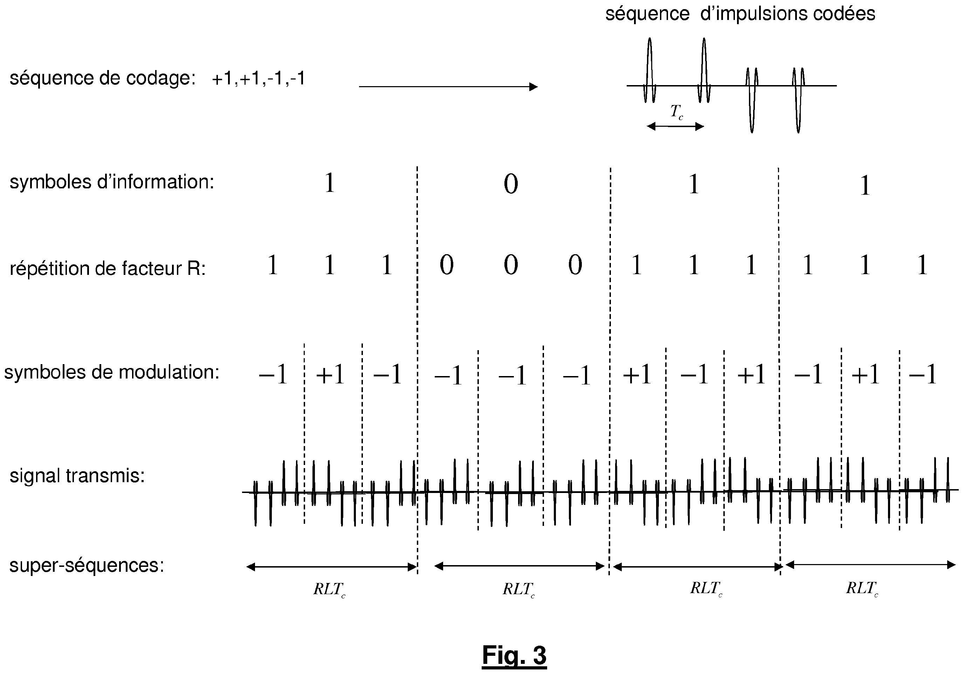

La Fig. 3 donne un exemple du passage de symboles d'information aux super-séquences d'impulsions.

Dans cet exemple, les symboles d'information (binaires) à transmettre ont été indiqués sur la seconde ligne. Chaque symbole d'information est transmis sur un temps-symbole représenté par un intervalle entre deux traits discontinus. Chaque symbole d'information est ici répété trois fois, comme indiqué en troisième ligne. La série des symboles d'information ainsi répétés fait ensuite l'objet d'une modulation DBPSK, un bit 1 se traduisant par une inversion de polarité et un bit 0 se traduisant par un maintien de polarité, comme indiqué en quatrième ligne. Chaque symbole BPSK (+1, -1) est ensuite codé à l'aide d'un code spécifique à l'émetteur (le code utilisé est indiqué sur la première ligne de la figure) pour moduler une séquence de $L$ impulsions successives du signal UWB de base, comme représenté en dernière ligne. L'ensemble des séquences d'impulsions correspondant à un même symbole d'information forme une super-séquence.

Dans le cas d'une modulation PSK ou BPSK, le signal transmis par l'émetteur peut être représenté par :

$$s_{Tx}(t) = \mathrm{Re}\left( \sum_{i=0}^{N-1} a_m^{(i)} \sum_{k=0}^{L-1} c_k\, p\left(t - \left(k + iN_c\right)T_c\right) \exp\left( j\left( 2\pi f_0\left(t - \left(k + iN_c\right)T_c\right) + \varphi_0\right)\right)\right) \qquad (16)$$

où *N* est le nombre de symboles d'information, après répétition (autrement dit *N* / *R* symboles d'information sont effectivement transmis), $a_m^{(i)}$, *i* = 1,...,*N* - 1, représentent les symboles de modulation et $c_k \in \{+1,-1\}$, *k* = 0,...,*L*-1 est le code utilisé par l'émetteur.

Dans le cas d'une modulation PPM, le signal transmis par l'émetteur peut être représenté par :

$$s_{Tx}(t) = \sum_{i=0}^{N-1} \sum_{k=0}^{L-1} c_k \, p\left(t - \left(k + iN_c\right)T_c - m^{(i)}\varepsilon\right) \cos\left(2\pi f_0\left(t - \left(k + iN_c\right)T_c - m^{(i)}\varepsilon\right) + \varphi_0\right) \quad (17)$$

où, là encore, *N* représente le nombre de symboles d'information, après répétition où $m^{(i)}$ est un symbole de modulation PPM à *M* positions temporelles. Si l'alphabet de modulation est 2-PPM, on choisit de préférence $\varepsilon = \dfrac{T_c}{2}$ et $m \in \{0,1\}$. Par exemple, une valeur de bit égale à 0 sera codée par la position 0 et une valeur de bit égale à 1 sera codée par la position $\dfrac{T_c}{2}$, autrement dit, un bit égal à 0 se traduira par une impulsion dans la première partie de la période et un bit égal à 1 se traduira par une impulsion dans la seconde partie de la période.

Le signal $s_{Rx}(t)$ reçu par le récepteur est dans tous les cas obtenu par convolution du signal émis par la réponse impulsionnelle du canal, autrement dit en remplaçant dans les expressions (16) et (17) la forme d'onde *p*(*t*) par

$$p_r(t) = \sum_{p=0}^{P-1} h_p \, p\left(t - t_p\right) \exp\left(-j2\pi f_0 t_p\right).$$

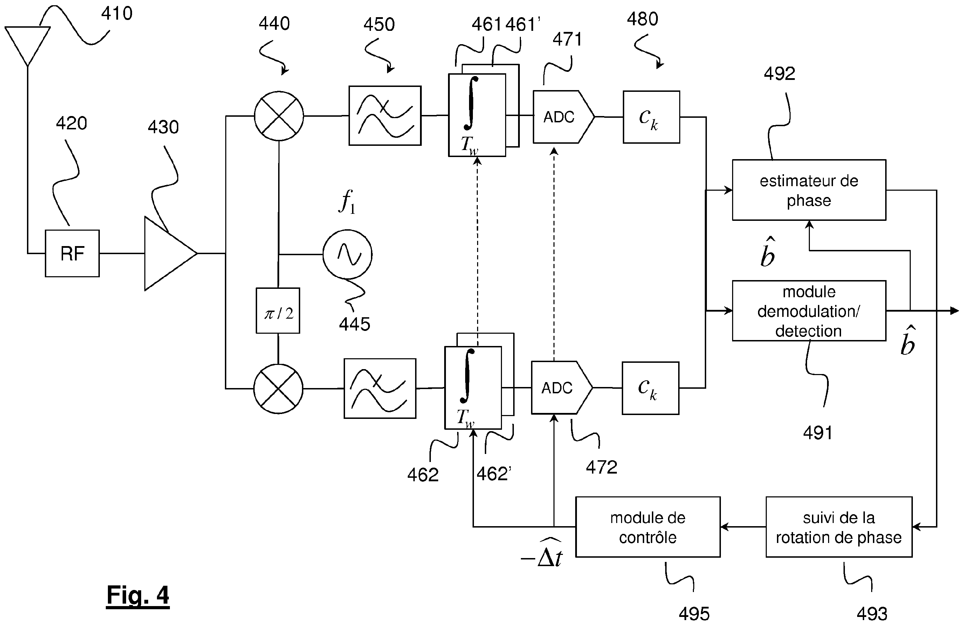

La Fig. 4 représente un récepteur de signal UWB à poursuite de dérive temporelle, selon un mode de réalisation de l'invention.

Le récepteur comprend, comme celui illustré en Fig. 2, une antenne UWB, 410, un filtre RF, 420, un amplificateur bas bruit, 430, un mélangeur en quadrature, 440, utilisant une fréquence $f_1$ fournie par un oscillateur local, 445. Les signaux en phase et en quadrature sont ensuite filtrés à l'aide de filtres passe-bas, 450, puis intégrés dans un étage d'intégration, 460, comprenant un premier intégrateur, 461, sur la voie en phase et un second intégrateur, 462, sur la voie en quadrature. Les premier et second intégrateurs intègrent le signal sur une même fenêtre temporelle de largeur $T_w$. Les convertisseurs analogique/numérique (ADC), 470, échantillonnent et numérisent les résultats d'intégration ainsi obtenus.

Idéalement, les fenêtres d'intégration disponibles se succèdent avec une périodicité $T_w$. Toutefois, afin de traiter le cas où une impulsion est à cheval sur deux fenêtres d'intégration successives, on prévoit en pratique deux intégrateurs multiplexés sur chacune des voies I et Q (représentés en arrière-plan), la fenêtre d'intégration d'un intégrateur sur une voie étant décalé de $T_w/2$ par rapport à la fenêtre d'intégration de l'autre intégrateur sur la même voie. En outre, le début des fenêtres d'intégration peut être décalé d'un pas temporel sensiblement plus faible que la durée $T_w$.

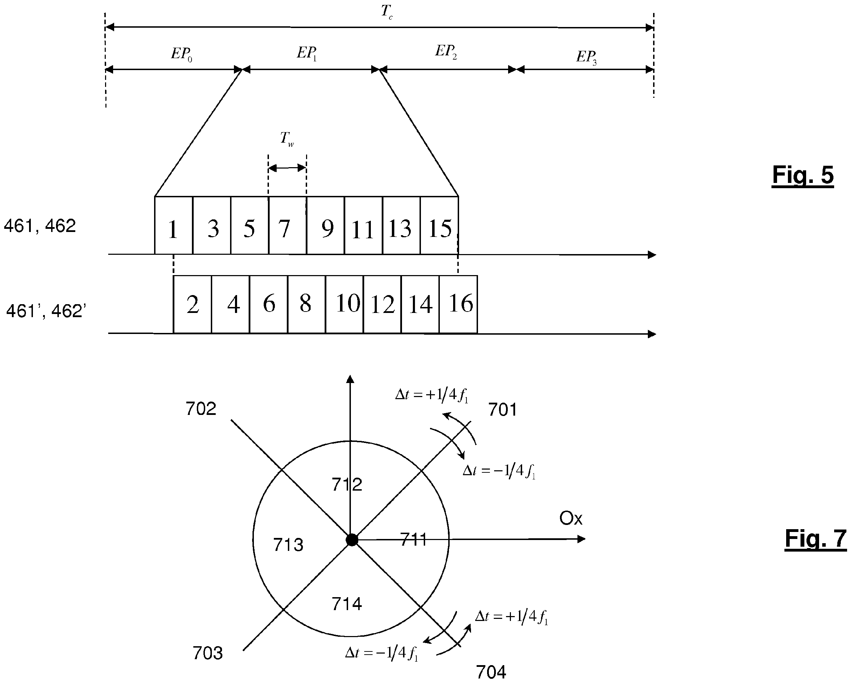

La Fig. 5 représente le découpage d'une période de répétition en fenêtres d'intégration. Plus précisément, chaque période de répétition $T_c$ est divisée en une pluralité de périodes élémentaires $EP_0,...,EP_{\eta-1}$ (ici $\eta = 4$) et chaque période élémentaire étant elle-même divisée en une première série de fenêtres d'intégration et une seconde série de fenêtres d'intégration, toutes de durée $T_w$, de sorte qu'une fenêtre de la première série recouvre deux fenêtres successives de la seconde série et réciproquement (taux de chevauchement de 50%).

Dans l'exemple particulier représenté, la période de répétition $T_c$ est de 64ns, les périodes élémentaires sont de 16ns (4 périodes élémentaires par période de répétition) et chaque période élémentaire comprend 16 fenêtres d'intégration chevauchantes de durée 2ns, les fenêtres d'intégration de rang pair (par ex. pour les intégrateurs 461' et 462') étant décalées de 1ns par rapport aux fenêtres d'intégration de rang impair (par exemple pour les intégrateurs 461 et 462).

En pratique, on prévoit un nombre prédéterminé de fenêtres d'intégration disponibles au sein d'une même période élémentaire, de manière à ne pas avoir un débit trop élevé en entrée du convertisseur. Plusieurs fenêtres peuvent être placées sur des impulsions au sein de la période de répétition, chaque fenêtre correspondant à un doigt d'un filtre RAKE. On sélectionne alors les P fenêtres temporelles (c'est-à-dire les P trajets présentant la plus forte énergie) parmi l'ensemble des fenêtres disponibles, pour alimenter P doigts du filtre RAKE, comme détaillé plus loin.

Revenant à la Fig. 4, les échantillons en sortie des convertisseurs sont fournis à un module de corrélation, 480, effectuant une sommation cohérente sur la séquence de code, donc sur une durée $LT_c$. On suppose que le récepteur détermine dans une phase d'apprentissage préalable, par exemple au moyen d'une séquence de symboles pilote, le début de la charge utile. Il connaît par conséquent la trame symbole et en particulier les instants auxquels démarrent les séquences de code. On suppose en outre que le récepteur a effectué, dans cette phase d'apprentissage, une estimation de canal et connait par conséquent les temps de propagation $t_p$, $p = 1,...,P$ des différents trajets. Il peut donc récupérer les échantillons complexes relatifs à chaque trajet.

Si l'on note $r_k$ les échantillons complexes fournis par les convertisseurs, le module 480 effectue la corrélation (ou désétalement) :

$$\tilde{r}^{(i)} = \sum_{k=0}^{L-1} c_k r_k^{(i)} \qquad\qquad (18)$$

où $i$ est un indice qui indexe ici les symboles de modulation et où l'on a choisi conventionnellement de démarrer le comptage des échantillons en début de séquence.

Il convient de noter que le module 480 est optionnel, celui-ci n'étant pas prévu en absence de codage du côté de l'émetteur.

Les échantillons complexes (voies I et Q) obtenus par le module de corrélation 480 (ou directement fournis par les convertisseurs ADC en absence de corrélation) sont fournis d'une part à un module de démodulation et détection 491 et, via un buffer FIFO (non représenté), à un estimateur de phase 492. Le buffer FIFO retarde les échantillons d'un temps $LRT_c$, autrement dit d'une super-séquence ou, de manière équivalente, d'un temps-symbole (période d'émission des symboles d'information).

Le module de démodulation et de détection, 491, retrouve les symboles d'information émis au moyen d'une décision dure, comme décrit plus loin. Les symboles d'information estimés par le module 491 sont également fournis à l'estimateur de phase, 492.

L'estimateur de phase, 492, reçoit, d'une part, les symboles d'information estimés par le module 491 et, d'autre part, les échantillons complexes, c'est-à-dire les résultats d'intégration éventuellement corrélés avec le code, en 480. A partir des symboles d'information, l'estimateur de phase détermine les symboles de modulation correspondants et élimine des échantillons complexes l'effet dû à cette modulation. L'estimateur de phase estime ensuite, à chaque temps symbole, la phase $\hat{\varphi}$ des échantillons complexes débarrassés de l'effet de la modulation.

Le module de suivi de rotation de phase, 493, reçoit la phase ainsi estimée, $\hat{\varphi}$, et déduit la rotation de cette phase au cours du temps depuis un instant de référence arbitraire. Cet instant de référence peut être par exemple la fin du préambule du paquet de données.

Le module de suivi de rotation de phase suit également la rotation de phase déjà compensée depuis l'instant de référence, $\Delta\Phi_c$, la compensation de la rotation de phase étant réalisée à l'aide des moyens de contrôle, 495, comme décrit plus loin. La rotation de phase non compensée, $\Delta\Phi_{uc}$, est obtenue à chaque temps-symbole comme la différence entre la rotation de phase et la rotation de phase déjà compensée. Le module de suivi de rotation de phase met à jour $\Delta\Phi_c$ à chaque compensation de phase.

Les moyens de contrôle, 495, reçoivent, à chaque temps symbole, la rotation de phase non compensée $\Delta\Phi_{uc}$ et appliquent, le cas échéant, un décalage temporel aux dites fenêtres d'intégration pour compenser tout ou partie de ladite rotation de phase non compensée, $\Delta\Phi_{uc}$.

Selon une première variante des moyens de contrôle, la totalité de $\Delta\Phi_{uc}$ est périodiquement compensée par les moyens de contrôle en décalant les fenêtres d'intégration ainsi que les instants d'échantillonnage de $-\dfrac{\Delta\Phi_{uc}}{2\pi f_1}$. La rotation de phase compensée est corrélativement mise à jour au sein des moyens de suivi de phase par $\Delta\Phi_c = \Delta\Phi_c + \Delta\Phi_{uc}$. La compensation de phase peut être effectuée à chaque temps-symbole voire tous les $n_T$ temps symboles où $n_T$ est un nombre entier non nul.

Selon une seconde variante, les moyens de contrôle comparent la valeur absolue de la rotation de phase non compensée, $|\Delta\Phi_{uc}|$, avec une valeur de seuil $\Delta\Phi_{th}$. Lorsque $|\Delta\Phi_{uc}|$ excède la valeur de seuil, les moyens de contrôle décalent les fenêtres d'intégration ainsi que les instants d'échantillonnage de $-\dfrac{\Delta\Phi_{th}}{2\pi f_1}\operatorname{sgn}\left(\Delta\Phi_{uc}\right)$ où $\operatorname{sgn}(\Delta\Phi_{uc})$ est le signe de $\Delta\Phi_{uc}$. La rotation de phase compensée est corrélativement mise à jour au sein des moyens de suivi de phase par $\Delta\Phi_c = \Delta\Phi_c + \operatorname{sgn}(\Delta\Phi_{uc})\Delta\Phi_{th}$. L'avantage de la seconde variante est de conduire à une implémentation très simple puisque le décalage temporel appliqué est constant au signe près.

L'estimateur de phase 492 sera décrit ci-après.

Selon une première variante, on suppose que l'estimateur de phase sélectionne le trajet du canal présentant la plus forte énergie, dénommé ci-après trajet prépondérant, autrement dit le trajet $p$ pour lequel $|h_p|$ est maximal. Il s'agit généralement du premier trajet lorsque l'émetteur est visible en ligne directe (LOS).

Lorsque la modulation est de type PSK, l'estimateur de phase 492 estime la phase des échantillons complexes, débarrassés de l'effet de la modulation, par :

$$\hat{\varphi} = \arg \sum_{i=0}^{R-1} \left( \tilde{r}^{(i)} \hat{a}^* \right) \tag{19}$$

où $\tilde{r}^{(i)}$ est l'échantillon complexe (l'indice $i$ démarre ici au début du temps symbole) et $\hat{a}$ est le symbole de modulation correspondant au symbole d'information $\hat{b}$ estimé par le module 491.

Lorsque la modulation est de type DBPSK, l'estimateur de phase 492 estime la phase des échantillons complexes, débarrassés de l'effet de la modulation, par :

$$\hat{\varphi} = \arg \left( \sum_{i=0}^{R-1} \tilde{r}^{(i)} \hat{a}_i \right) \tag{20}$$

où $\tilde{r}^{(i)}$ est l'échantillon complexe et les $\hat{a}_i$ sont les symboles de modulation DBPSK correspondant au symbole d'information estimé par le module 491.

Lorsque la modulation est de type PPM, l'estimateur de phase 492 estime la phase des échantillons complexes, débarrassés de l'effet de la modulation, par :

$$\hat{\varphi} = \arg \left( \sum_{i=0}^{R-1} \left( \tilde{r}^{(i)} \exp \left( 2\pi j f_1 m \varepsilon \right) \right) \right) \tag{21}$$

où $m$ est la position de modulation relative au symbole d'information estimé courant.

On a supposé dans la première variante que seul le trajet prépondérant du canal était sélectionné. Selon une seconde variante, on effectue une combinaison des résultats de corrélation associés aux $P$ trajets à l'aide d'un filtre RAKE cohérent, préalablement à l'estimation de phase (21), (22) ou (23). On se ramène ainsi au cas mono-trajet précédent. Par filtre RAKE cohérent, on entend un filtre combinant les différents doigts après les avoir respectivement pondérés par les coefficients complexes conjugués des différents trajets (combinaison dite MRC).

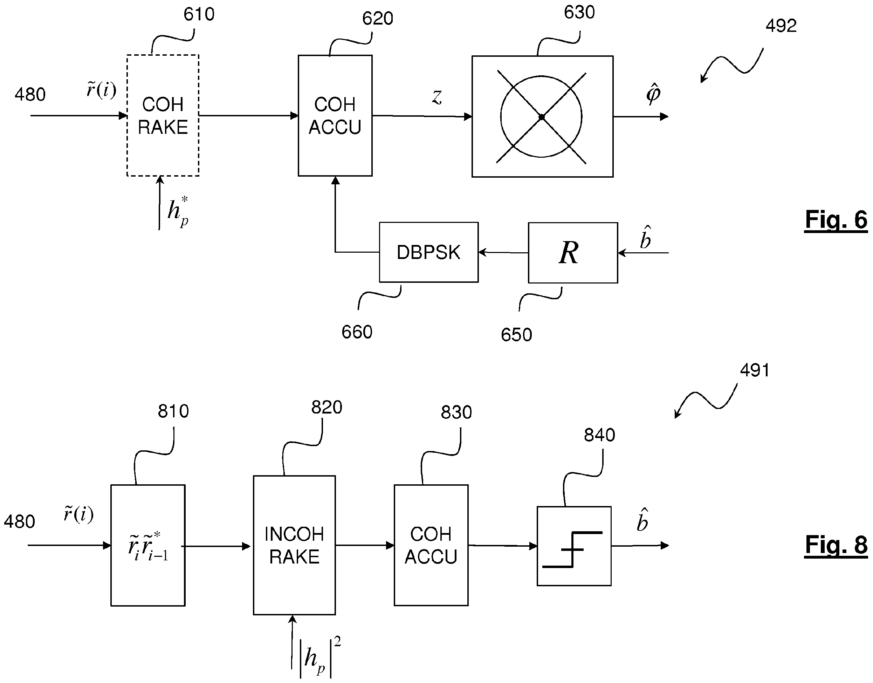

La Fig. 6 représente un exemple avantageux de réalisation de l'estimateur de phase 492, lorsque la modulation utilisée au niveau de l'émetteur est de type DBPSK.

L'estimateur de phase 492 comprend un filtre RAKE cohérent, 610, effectuant, pour un même symbole de modulation, une combinaison MRC des résultats de corrélation relatifs aux différents trajets. A défaut, seul le résultat de corrélation relatif au trajet de plus forte énergie est pris en compte.

L'estimateur de phase 492 reçoit par ailleurs du module de démodulation et détection 491 les symboles d'information estimés, $\hat{b}$. Chaque symbole d'information estimé $\hat{b}$ est répété $R$ fois dans le répéteur 650. Les symboles d'information ainsi répétés sont fournis à un modulateur DBPSK, 660.

Les symboles de modulation $\hat{a}_i$ issus du modulateur 660 sont fournis à un accumulateur cohérent, 620. Cet accumulateur calcule la somme $z = \sum_{i=0}^{R-1} \tilde{r}^{(i)} \hat{a}_i$ sur chaque temps-symbole, et la phase de la somme ainsi obtenue est ensuite déterminée par le module de calcul de phase, 630.

Selon un mode avantageux de réalisation, la phase est quantifiée selon une pluralité de secteurs, par exemple quatre secteurs de taille $\pi/2$ : $]-\pi/4,+\pi/4]$, $]+\pi/4,+3\pi/4]$, $]+3\pi/4,+5\pi/4]$, $]+5\pi/4,+7\pi/4]$.

Le module de suivi de rotation de phase tient à jour un compteur algébrique, $C_n$, du franchissement des phases $(2\kappa+1)\pi/4$, par la rotation de phase. Le compteur est algébrique dans la mesure où il est incrémenté lors d'un franchissement dans le sens trigonométrique et décrémenté dans le sens inverse. L'indice n indexe ici les symboles d'information. Le compteur est initialisé à l'instant de référence, par exemple à la fin du préambule, avant réception des symboles d'information dans la charge utile, soit $C_0 = 0$.

La Fig. 7 représente graphiquement la manière dont les franchissements de phase sont détectés.

Les demi-droites 701-704 faisant respectivement des angles $\pi/4, 3\pi/4, 7\pi/4, 9\pi/4$ avec l'axe Ox délimitent 4 secteurs 711-714. Lorsque la rotation de phase franchit une frontière entre deux secteurs consécutifs soit dans le sens trigonométrique, soit dans le sens inverse, ce franchissement est comptabilisé de manière algébrique par le compteur $C_n$.

Plus précisément, le détecteur de franchissement de phase ramène d'abord la phase de $z_n$ obtenu par l'accumulateur (l'indexation par $n$ correspond au symbole d'information courant) dans le quadrant $[-\pi/4, \pi/4]$ au moyen de :

$$z_n = z_n \ \text{si} \ C_n = 0 \ \text{modulo} \ 4$$

$$z_n = -jz_n \ \text{si} \ C_n = 1 \ \text{modulo} \ 4$$

$$z_n = -z_n \ \text{si} \ C_n = 2 \ \text{modulo} \ 4$$

$$z_n = jz_n \ \text{si} \ C_n = 3 \ \text{modulo} \ 4 \tag{22}$$

Il détecte ensuite si la phase de $z_n$, ramenée dans le premier quadrant, est supérieure à $\pi/4$ ou inférieure à $-\pi/4$. Pour ce faire, il teste d'abord si $|\text{Im}(z_n)| > \text{Re}(z_n)$. Si c'est le cas, il y a bien eu franchissement de phase pendant le temps-symbole. On distingue alors, grâce au signe de $\text{Im}(z_n)$, si ce franchissement s'est fait dans le sens trigonométrique ($\text{Im}(z_n) > 0$) ou dans le sens inverse ($\text{Im}(z_n) < 0$). Dans la première situation on incrémente le compteur $C_n = C_{n-1}+1$ et dans la seconde on le décrémente $C_n = C_{n-1}-1$. En revanche, si $|\text{Im}(z_n)| \leq \text{Re}(z_n)$, il n'y a pas de franchissement de phase et donc $C_n = C_{n-1}$.

Lorsqu'il y a franchissement de phase, l'estimateur de phase l'indique aux moyens de contrôle sous la forme d'un bit signé (+1 ou -1, la valeur nulle signifiant en revanche une absence de franchissement).

Les moyens de contrôle varient alors les positions des $P$ fenêtres temporelles d'un temps égal à $-\text{sgn}(C_n)/2f_1$ et en parallèle l'estimateur de module de suivi met à jour son compteur au moyen de $C_n = C_n - 2\text{sgn}(C_n)$ pour tenir compte de la compensation de dérive temporelle déjà effectuée.

On comprendra que, pour que la compensation de dérive soit correctement effectuée, la rotation de phase sur un temps-symbole doit être inférieure en valeur absolue à $\pi/4$, autrement dit le glissement temporel des fenêtres d'intégration entre deux impulsions successives doit être inférieur à $1/(8RLf_1)$. A défaut, il y a repliement de phase sur un temps-symbole et donc ambiguïté sur le glissement. Pour relâcher cette contrainte, on peut prévoir une pré-compensation de glissement temporel au niveau des moyens de contrôle 495 et le cas échéant, une dé-rotation de phase complémentaire en sortie des convertisseurs analogique-numérique, 471-472, de manière à n'avoir à compenser sur un temps-symbole qu'un déphasage résiduel inférieur en valeur absolue à $\pi/4$. La pré-compensation pourra utiliser une estimation plus grossière du déphasage obtenue de manière connue en soi.

La structure du module de démodulation et de détection, 491 est représentée schématiquement en Fig. 8. On rappelle que celui-ci reçoit les résultats de corrélation du module 480 (ou directement les échantillons des convertisseurs ADC en absence de codage).

Si la modulation utilisée à l'émetteur est une modulation différentielle, le module 491 comprend des moyens de multiplication hermitienne 810. Ces moyens multiplient le résultat de corrélation courant avec le conjugué du résultat de corrélation obtenu $LT_1$ plus tôt. Ainsi, on effectue une démodulation différentielle pour chacun des trajets du canal. On comprendra que ces moyens 810 sont absents lorsque la modulation est directe (PSK ou PPM).

Le module 491 comprend ensuite un filtre RAKE, 820 pour combiner les contributions des différents trajets du canal. Ce filtre RAKE sera en général non-cohérent, c'est-à-dire que les contributions des différents trajets seront pondérées par les modules quadratiques des coefficients des différents trajets). En revanche lorsque la modulation est une modulation PSK, le filtre RAKE doit être cohérent (combinaison MRC).

Après la combinaison des différents trajets, le module d'accumulation 830 accumule les contributions relatives aux $R$ symboles issus d'un même symbole d'information. Il fournit un résultat accumulé à chaque temps-symbole.

Le module de décision, 840, prend ensuite une décision dure (détection de signe sur la partie réelle dans le cas d'une modulation DBPSK) sur le résultat accumulé pour fournir une estimation $\hat{b}$ du symbole d'information émis pendant le temps-symbole. Le symbole d'information $\hat{b}$ est transmis à l'estimateur de phase, 492.

**Revendications**

1. Récepteur UWB à poursuite de dérive temporelle, destiné à recevoir un signal UWB impulsionnel, le signal UWB impulsionnel comprenant des impulsions se succédant avec une première période de répétition ($T_c$), modulées à une fréquence porteuse, ledit signal UWB impulsionnel étant en outre modulé pour transmettre des symboles d'information, chaque symbole d'information étant transmis sur un temps-symbole ($RLT_c$) pendant lequel le symbole d'information est répété une pluralité (*R*) de fois, ledit récepteur comprenant :

- un mélangeur en quadrature (440) pour translater en bande de base ledit signal UWB impulsionnel à l'aide d'une fréquence de translation, égale, à un offset près, à ladite fréquence porteuse ;

et, pour chacune des voies en phase et en quadrature dudit mélangeur :

- un étage d'intégration (461,462) du signal ainsi translaté en bande de base, pendant des fenêtres temporelles sélectionnées, chaque fenêtre temporelle sélectionnée se répétant avec une seconde période ($T_1$) ;
- un étage d'échantillonnage (471,472) pour échantillonner les résultats d'intégration sur lesdites fenêtres temporelles sélectionnées, de sorte à fournir pour chacune de ces fenêtres temporelles un échantillon complexe ;

ledit récepteur comprenant en outre :

- un module de démodulation/détection (491) pour estimer lesdits symboles d'information à partir des échantillons complexes ainsi obtenus ;

ledit récepteur étant **caractérisé par** :

- un estimateur de phase (492), pour estimer à chaque temps-symbole, la phase des échantillons complexes, débarrassés de la modulation due aux symboles d'information ainsi estimés ;
- un module de suivi de rotation de phase (493) pour suivre d'une part la rotation de la phase ainsi estimée depuis un instant de référence et d'autre part une rotation de phase déjà compensée depuis ce même instant, et en déduire une rotation de phase non compensée;
- des moyens de contrôle (495) appliquant un décalage temporel aux dites fenêtres temporelles pour compenser au moins une partie de ladite rotation de phase non compensée.

2. Récepteur UWB selon la revendication 1, **caractérisé en ce que** les moyens de contrôle (495) reçoivent la rotation de phase non compensée, $\Delta\Phi_{uc}$, et décalent les fenêtres d'intégration ainsi que les instants d'échantillonnage de

$$-\frac{\Delta\Phi_{uc}}{2\pi f_1},$$ le décalage temporel étant appliqué à chaque temps-symbole.

3. Récepteur UWB selon la revendication 1, **caractérisé en ce que** les moyens de contrôle (495) reçoivent la rotation de phase non compensée, $\Delta\Phi_{uc}$ la comparent avec une valeur de seuil $\Delta\Phi_{th}$, et lorsque $|\Delta\Phi_{uc}|$ excède la valeur de seuil, décalent les fenêtres d'intégration ainsi que les instants d'échantillonnage de $-\frac{\Delta\Phi_{th}}{2\pi f_1}\mathrm{sgn}\left(\Delta\Phi_{uc}\right)$ où $\mathrm{sgn}(\Delta\Phi_{uc})$ est le signe de $\Delta\Phi_{uc}$.

4. Récepteur UWB selon l'une des revendications précédentes, **caractérisé en ce que** l'estimateur de phase (492) estime la phase des échantillons complexes, débarrassés de l'effet de la modulation, à partir des échantillons complexes relatifs au trajet le plus énergétique du canal de transmission.

5. Récepteur UWB selon l'une des revendications 1 à 3, **caractérisé en ce que** l'estimateur de phase (492) comprend un filtre RAKE cohérent pour combiner les échantillons complexes relatifs à différents trajets du canal de transmission à l'aide des coefficients complexes de ces trajets, la phase des échantillons complexes débarrassés de l'effet de la modulation étant alors estimée à partir des échantillons complexes ainsi combinés.

6. Récepteur UWB selon l'une des revendications précédentes, **caractérisé en ce que** chaque temps-symbole contient une pluralité de symboles de modulation associés au symbole d'information transmis sur ce temps-symbole, chaque symbole de modulation étant étalé à l'aide d'un code d'étalement de longueur $L \geq 1$ pour fournir une séquence codée, chaque bribe de la séquence codée modulant une impulsion du signal UWB, le récepteur comprenant un étage de corrélation (480), corrélant les échantillons complexes avec le code d'étalement avant de les fournir au module de démodulation/ détection (491) ainsi qu'à l'estimateur de phase (492).

7. Récepteur UWB selon la revendication 6, **caractérisé en ce que** lesdits symboles de modulation sont obtenus à partir des symboles d'information répétés, au moyen d'une modulation de type PSK.

8. Récepteur UWB selon la revendication 6, **caractérisé en ce que** lesdits symboles de modulation sont obtenus à partir des symboles d'information répétés, au moyen d'une modulation de type PPM.

9. Récepteur UWB selon la revendication 6, **caractérisé en ce que** lesdits symboles de modulation sont obtenus à partir des symboles d'information répétés, au moyen d'une modulation DBPSK.

10. Récepteur UWB selon la revendication 9, **caractérisé en ce que** l'estimateur de phase (492) comprend un répéteur (650) pour répéter les symboles d'information fournis par le module de démodulation/détection (491), un modulateur DBPSK (660) pour générer des symboles de modulation à partir des symboles d'information ainsi répétés, un accumulateur cohérent (620) pour accumuler les échantillons complexes signés par les symboles de modulation successifs et un module de calcul de phase (630) pour déterminer la phase de la somme ainsi accumulée.

11. Récepteur UWB selon la revendication 10, **caractérisé en ce que** le module de suivi de rotation de phase (493) comprend un détecteur de franchissements des phases $(2\kappa+1)\pi/4$, $\kappa = 0,1,2,3$, le détecteur comptant les franchissements de manière algébrique, un franchissement dans le sens trigonométrique étant compté selon une première polarité et un franchissement dans le sens inverse du sens trigonométrique l'étant selon une polarité inverse de la première polarité.

12. Récepteur UWB selon l'une des revendications 9 à 11, **caractérisé en ce que** le module de démodulation/détection (491) comprend des moyens de multiplication hermitienne (810) pour fournir le produit hermitien de chaque échantillon complexe avec l'échantillon précédent, un filtre RAKE incohérent (820) pour combiner les produits hermitiens relatifs à différents trajets du canal de transmission, un accumulateur cohérent (830) pour accumuler les produits hermitiens combinés ainsi obtenus sur la durée d'un temps-symbole et un module de décision pour prendre, à chaque temps-symbole, une décision dure sur le symbole d'information à partir du résultat d'accumulation fourni par l'accumulateur cohérent.

13. Méthode de réception avec poursuite temporelle d'un signal UWB impulsionnel, le signal UWB impulsionnel comprenant des impulsions se succédant avec une première période de répétition ($T_c$), modulées à une fréquence porteuse, ledit signal UWB impulsionnel étant en outre modulé pour transmettre des symboles d'information, chaque symbole d'information étant transmis sur un temps-symbole ($RLT_c$) pendant lequel le symbole d'information est répété une pluralité ($R$) de fois, ladite méthode comprenant :

- une étape de mélange en quadrature pour translater en bande de base ledit signal UWB impulsionnel à l'aide d'une fréquence de translation, égale, à un offset près, à ladite fréquence porteuse ;
- une étape d'intégration du signal ainsi translaté en bande de base, pendant des fenêtres temporelles sélectionnées, chaque fenêtre temporelle sélectionnée se répétant avec une seconde période ($T_1$) ;
- une étape d'échantillonnage pour échantillonner les résultats d'intégration sur lesdites fenêtres temporelles de sorte à fournir pour chacune d'entre elles un échantillon complexe ;
- une étape de démodulation/détection pour estimer lesdits symboles d'information à partir des échantillons complexes ainsi obtenus ;

ladite méthode étant en outre **caractérisée par** :

- une étape d'estimation de phase estimant, à chaque temps-symbole, la phase des échantillons complexes, débarrassés de la modulation due aux symboles d'information ainsi estimés ;
- un suivi de rotation de phase pour suivre d'une part la rotation de la phase ainsi estimée depuis un instant de référence et d'autre part une rotation de phase déjà compensée depuis ce même instant, et en déduire une rotation de phase non compensée;
- une étape de contrôle des fenêtres temporelles appliquant un décalage temporel aux dites fenêtres temporelles pour compenser au moins une partie de ladite rotation de phase non compensée.

14. Méthode de réception avec poursuite temporelle selon la revendication 13, **caractérisée en ce que** chaque temps-symbole contient une pluralité de symboles de modulation associés au symbole d'information transmis sur ce temps-symbole, chaque symbole de modulation étant étalé à l'aide d'un code d'étalement de longueur $L \geq 1$ pour fournir une séquence codée, chaque bribe de la séquence codée modulant une impulsion du signal UWB, ladite méthode comprenant en outre une étape de corrélation corrélant les échantillons complexes avec le code d'étalement avant de les fournir à l'étape de démodulation/détection et à l'étape d'estimation de phase.

**Patentansprüche**

1. UWB-Empfänger mit Verfolgung der Zeitverschiebung, der dazu ausgelegt ist, ein UWB-Pulssignal zu empfangen, wobei das UWB-Pulssignal Pulse umfasst, die mit einer ersten Wiederholungsperiode ($T_c$) aufeinander folgen, die mit einer Trägerfrequenz moduliert sind, wobei das UWB-Pulssignal ferner dazu moduliert ist, Informationssymbole zu übertragen, wobei jedes Informationssymbol auf einer Symbolzeit ($RLT_c$) übertragen wird, während der das Informationssymbol eine Mehrzahl ($R$) von Malen wiederholt wird, wobei der Empfänger Folgendes umfasst:

   - einen Quadraturmischer (440) zum Umsetzen des UWB-Pulssignals ins Basisband mit Hilfe einer Umsetzfrequenz, die bis auf einen Offset gleich der Trägerfrequenz ist;

   und, für jeden der Phasen- und Quadraturkanäle des Mischers:

   - eine Stufe (461, 462) zur Integration des derart ins Basisband umgesetzten Signals während ausgewählter Zeitfenster, wobei jedes ausgewählte Zeitfenster mit einer zweiten Periode ($T_1$) wiederholt wird;
   - eine Abtaststufe (471, 472) zum Abtasten der Integrationsergebnisse auf den ausgewählten Zeitfenstern derart, dass für jedes dieser Zeitfenster ein komplexer Abtastwert geliefert wird;

   wobei der Empfänger ferner umfasst:

   - ein Demodulations-/Detektionsmodul (491) zum Abschätzen der Informationssymbole ausgehend von den derart erhaltenen komplexen Abtastwerten;

   wobei der Empfänger **gekennzeichnet ist durch**:

   - einen Phasenabschätzer (492) zum Abschätzen der Phase der komplexen Abtastwerte zu jeder Symbolzeit, befreit von der Modulation aufgrund der derart abgeschätzten Informationssymbole;
   - ein Phasenrotationsfolgemodul (493) zum Folgen einerseits der Rotation der derart abgeschätzten Phase ausgehend von einem Referenzzeitpunkt und andererseits einer bereits kompensierten Phasenrotation von diesem gleichen Zeitpunkt ausgehend, und zum Ableiten einer nicht kompensierten Phasenrotation hieraus;
   - Steuermittel (495), die einen zeitlichen Versatz auf die Zeitfenster anwenden, um wenigstens einen Teil der nicht kompensierten Phasenrotation zu kompensieren.

2. UWB-Empfänger nach Anspruch 1, **dadurch gekennzeichnet, dass** die Steuermittel (495) die nicht kompensierte Phasenrotation $\Delta\Phi_{uc}$ empfangen und die Integrationsfenster sowie die Abtastzeitpunkte um $-\dfrac{\Delta\Phi_{uc}}{2\pi f_1}$ versetzen, wobei der zeitliche Versatz auf jede Symbolzeit angewandt wird.

3. UWB-Empfänger nach Anspruch 1, **dadurch gekennzeichnet, dass** die Steuermittel (495) die nicht kompensierte Phasenrotation $\Delta\Phi_{uc}$ empfangen, sie mit einem Schwellenwert $\Delta\Phi_{th}$ vergleichen, und dann, wenn $|\Delta\Phi_{uc}|$ den Schwellenwert übersteigt, die Integrationsfenster sowie die Abtastzeitpunkte um $-\dfrac{\Delta\Phi_{th}}{2\pi f_1}\,\mathrm{sgn}(\Delta\Phi_{uc})$ versetzen, wobei $\mathrm{sgn}(\Delta\Phi_{uc})$ das Vorzeichen von $\Delta\Phi_{uc}$ ist.

4. UWB-Empfänger nach einem der vorhergehenden Ansprüche, **dadurch gekennzeichnet, dass** der Phasenabschätzer (492) die Phase der komplexen Abtastwerte, befreit vom Effekt der Modulation, ausgehend von den komplexen Abtastwerten relativ zum energiereichsten Weg des Übertragungskanals abschätzt.

5. UWB-Empfänger nach einem der Ansprüche 1 bis 3, **dadurch gekennzeichnet, dass** der Phasenabschätzer (492) ein kohärentes RAKE-Filter umfasst, um die komplexen Abtastwerte relativ zu verschiedenen Wegen des Übertragungskanals mit Hilfe der komplexen Koeffizienten dieser Wege zu kombinieren, wobei die Phase der komplexen Abtastwerte, befreit vom Effekt der Modulation, dann ausgehend von den derart kombinierten komplexen Abtastwerten abgeschätzt wird.

6. UWB-Empfänger nach einem der vorhergehenden Ansprüche, **dadurch gekennzeichnet, dass** jede Symbolzeit eine Mehrzahl von Modulationssymbolen enthält, die dem auf diese Symbolzeit übertragenen Informationssymbol zugeordnet sind, wobei jedes Modulationssymbol mit Hilfe eines Spreizungscodes der Länge $L \geq 1$ gespreizt ist, um eine kodierte Sequenz zu liefern, wobei jeder Block der kodierten Sequenz einen Puls des UWB-Signals moduliert, wobei der Empfänger eine Korrelationsstufe (480) umfasst, die die komplexen Abtastwerte mit dem Spreizungscode korreliert, bevor sie an das Demodulations-/Detektionsmodul (491) sowie an den Phasenabschätzer (492) geliefert werden.

7. UWB-Empfänger nach Anspruch 6, **dadurch gekennzeichnet, dass** die Modulationssymbole ausgehend von den wiederholten Informationssymbolen mit Hilfe einer Modulation vom Typ PSK erhalten werden.

8. UWB-Empfänger nach Anspruch 6, **dadurch gekennzeichnet, dass** die Modulationssymbole ausgehend von den wiederholten Informationssymbolen mit Hilfe einer Modulation vom Typ PPM erhalten werden.

9. UWB-Empfänger nach Anspruch 6, **dadurch gekennzeichnet, dass** die Modulationssymbole ausgehend von den wiederholten Informationssymbolen mit Hilfe einer Modulation vom Typ DBPSK erhalten werden.

10. UWB-Empfänger nach Anspruch 9, **dadurch gekennzeichnet, dass** der Phasenabschätzer (492) einen Wiederholer (650) umfasst, um die Informationssymbole zu wiederholen, die durch das Demodulations-/Detektionsmodul (491) geliefert sind, einen DBPSK-Modulator (660), um Modulationssymbole ausgehend von den derart wiederholten Informationssymbolen zu generieren, einen kohärenten Akkumulator (620) zum Akkumulieren der komplexen Abtastwerte, die durch die aufeinanderfolgenden Modulationssymbole signiert sind, sowie ein Phasenberechnungsmodul (630) zum Bestimmen der Phase der derart akkumulierten Summe.

11. UWB-Empfänger nach Anspruch 10, **dadurch gekennzeichnet, dass** das Phasenrotationsfolgemodul (493) einen Detektor für Überschreitungen der Phasen $(2\kappa + 1)\,\pi\,/\,4$, $\kappa = 0, 1, 2, 3$, umfasst, wobei der Detektor die Überschreitungen in algebraischer Weise zählt, wobei eine Überschreitung in der trigonometrischen Richtung gemäß einer ersten Polarität gezählt wird, und eine Überschreitung in der Richtung entgegengesetzt zur trigonometrischen Richtung gemäß einer Polarität entgegengesetzt zur ersten Polarität gezählt wird.

12. UWB-Empfänger nach einem der Ansprüche 9 bis 11, **dadurch gekennzeichnet, dass** das Demodulations-/Detektionsmodul (491) Mittel zur hermiteschen Multiplikation (810) umfasst, um das hermitesche Produkt jedes komplexen Abtastwerts mit dem vorhergehenden Abtastwert zu liefern, ein inkohärentes RAKE-Filter (820) zum Kombinieren der hermiteschen Produkte relativ zu verschiedenen Wegen des Übertragungskanals, einen kohärenten Akkumulator (830) zum Akkumulieren der derart erhaltenen kombinierten hermiteschen Produkte über die Dauer einer Symbolzeit, und ein Entscheidungsmodul, um zu jeder Symbolzeit eine harte Entscheidung über das Informationssymbol zu treffen ausgehend vom Akkumulationsergebnis, das durch den kohärenten Akkumulator geliefert ist.

13. Empfangsverfahren mit zeitlicher Verfolgung eines UWB-Pulssignals, wobei das UWB-Pulssignal Pulse umfasst, die mit einer ersten Wiederholungsperiode ($T_c$) aufeinander folgen, die mit einer Trägerfrequenz moduliert sind, wobei das UWB-Pulssignal ferner dazu moduliert ist, Informationssymbole zu übertragen, wobei jedes Informationssymbol auf einer Symbolzeit ($RLT_c$) übertragen wird, während der das Informationssymbol eine Mehrzahl ($R$) von Malen wiederholt wird, wobei das Verfahren Folgendes umfasst:

  - einen Schritt der Quadraturmischung zum Umsetzen des UWB-Pulssignals ins Basisband mit Hilfe einer Umsetzfrequenz, die bis auf einen Offset gleich der Trägerfrequenz ist;
  - einen Schritt der Integration des derart ins Basisband umgesetzten Signals während ausgewählten Zeitfenstern, wobei jedes ausgewählte Zeitfenster mit einer zweiten Periode ($T_1$) wiederholt wird;
  - einen Schritt der Abtastung zum Abtasten der Integrationsergebnisse auf den Zeitfenstern derart, dass für jedes von ihnen ein komplexer Abtastwert geliefert wird;
  - einen Schritt der Demodulation/Detektion zum Abschätzen der Informationssymbole ausgehend von den derart erhaltenen komplexen Abtastwerten;

wobei das Verfahren ferner **gekennzeichnet ist durch** Folgendes:

- einen Schritt der Phasenabschätzung, in dem zu jeder Symbolzeit die Phase der komplexen Abtastwerte, befreit von der Modulation aufgrund der derart abgeschätzten Informationssymbole, abgeschätzt wird;
- eine Phasenrotationsverfolgung, um einerseit der Rotation der derart abgeschätzten Phase ausgehend von einem Referenzzeitpunkt zu folgen, und andererseits einer bereits kompensierten Rotation der Phase ausgehend von diesem gleichen Zeitpunkt, und hieraus eine nicht kompensierte Phasenrotation abzuleiten;
- einen Schritt der Steuerung der Zeitfenster unter Anwendung eines zeitlichen Versatzes auf die Zeitfenster, um wenigstens einen Teil der nicht kompensierten Phasenrotation zu kompensieren.

14. Empfangsverfahren mit zeitlicher Verfolgung nach Anspruch 13, **dadurch gekennzeichnet, dass** jede Symbolzeit eine Mehrzahl von Modulationssymbolen enthält, die dem auf diese Symbolzeit übertragenen Informationssymbol zugeordnet sind, wobei jedes Modulationssymbol mit Hilfe eines Spreizungscodes der Länge $L \geq 1$ gespreizt ist, um eine kodierte Sequenz zu liefern, wobei jeder Block der kodierten Sequenz einen Puls des UWB-Signals moduliert, wobei das Verfahren ferner einen Schritt der Korrelation umfasst, der die komplexen Abtastwerte mit dem Spreizungscode korreliert, bevor sie an den Demodulations-/Detektionsschritt sowie an den Phasenabschätzschritt geliefert werden.

## Claims

1. A time drift tracking UWB receiver, for receiving a pulsed UWB signal, the pulsed UWB signal comprising pulses following each other with a first repetition period ($T_c$), modulated at a carrier frequency, said pulsed UWB signal being further modulated to transmit information symbols, each information symbol being transmitted over a time-symbol ($RLT_c$) during which the information symbol is repeated a plurality ($R$) of times, said receiver comprising:

- a quadrature mixer (440) for translating in baseband said pulsed UWB signal using a translation frequency, equal, within one offset, to said carrier frequency;
- an integrating stage (461, 462) for integrating said signal thus translated in baseband, during selected time windows, each selected time window being repeated with a second period ($T_1$);
- a sampling stage (471, 472) for sampling the integration results on said selected time windows and providing a complex sample for each of them;
- a demodulating/detecting module (491) for estimating said information symbols from the complex samples thus obtained;

said receiver being further **characterized by**:

- a phase estimator (492), for estimating at each time-symbol, the phase of the complex samples, free of the modulation due to the information symbols thus estimated;
- a phase rotation follow-up module (493) for following up on the one hand the rotation of the phase thus estimated from a reference instant and on the other hand a rotation of phase already compensated from this same instant, and deducing therefrom a non-compensated phase rotation;
- controlling means (495) applying a time offset to said time windows to compensate for at least one part of said non-compensated phase rotation.

2. The UWB receiver according to claim 1, **characterized in that** the controlling means (495) receive the non-compensated phase rotation, $\Delta\Phi_{uc}$, and offset the integration windows as well as the sampling instants by $-\dfrac{\Delta\Phi_{uc}}{2\pi f_1}$, the time offset being applied to each time-symbol.

3. The UWB receiver according to claim 1, **characterized in that** the controlling means (495) receive the non-compensated phase rotation, $\Delta\Phi_{uc}$, compare it with a threshold value $\Delta\Phi_{th}$, and when $|\Delta\Phi_{uc}|$ exceeds the threshold value, offset the integration windows as well as the sampling instants by $-\dfrac{\Delta\Phi_{th}}{2\pi f_1}\mathrm{sgn}\left(\Delta\Phi_{uc}\right)$ where $\mathrm{sgn}(\Delta\Phi_{uc})$

is the sign of $\Delta\Phi_{uc}$.

4. The UWB receiver according to one of the preceding claims, **characterized in that** the phase estimator (492) estimates the phase of the complex samples, free of the modulation effect, from the complex samples relating to the highest energy path of the transmission channel.

5. The UWB receiver according to one of claims 1 to 3, **characterized in that** the phase estimator (492) comprises a coherent RAKE filter for combining complex samples relating to different paths of the transmission channel using complex coefficients of these paths, the phase of the complex samples free of the modulation effect being then estimated from thus combined complex samples.

6. The UWB receiver according to one of the preceding claims, **characterized in that** each time-symbol contains a plurality of modulation symbols associated with the information symbol transmitted on this time-symbol, each modulation symbol being spread using a spreading code with a length $L \geq 1$ to provide a coded sequence, each chip of the coded sequence modulating a pulse of the UWB signal, the receiver comprising a correlating stage (480), correlating the complex samples with the spreading code before providing them to the demodulating/detecting module (491) as well as to the phase estimator (492).

7. The UWB receiver according to claim 6, **characterized in that** said modulation symbols are obtained from the repeated information symbols, by means of a PSK type modulation.

8. The UWB receiver according to claim 6, **characterized in that** said modulation symbols are obtained from the repeated information symbols, by means of a PPM type modulation.

9. The UWB receiver according to claim 6, **characterized in that** said modulation symbols are obtained from the repeated information symbols, by means of a DBPSK modulation.

10. The UWB receiver according to claim 9, **characterized in that** the phase estimator (492) comprises a repeater (650) for repeating the information symbols provided by the demodulating/detecting module (491), a DBPSK modulator (660) for generating modulation symbols from the information symbols thus repeated, a coherent accumulator (620) for accumulating the complex samples signed by the successive modulation symbols and a phase calculating module (630) for determining the phase of the sum thus accumulated.

11. The UWB receiver according to claim 10, **characterized in that** the phase rotation follow-up module (493) comprises a detector of crossings of the phases $(2\kappa+1)\pi/4$, $\kappa = 0,1,2,3$, the detector algebraically counting the crossings, a crossing in the counter clockwise direction being counted at a first polarity and a crossing in the clockwise direction being at a reverse polarity to the first polarity.

12. The UWB receiver according to one of claims 9 to 11, **characterized in that** the demodulating/detecting module (491) comprises hermitian multiplication means (810) for providing the hermitian product of each complex sample with the preceding sample, an incoherent RAKE filter (820) for combining the hermitian products relating to different paths of the transmission channel, a coherent accumulator (830) for accumulating the combined hermitian products thus obtained over the duration of a time-symbol and a decision making module for making, at each time-symbol, a hard decision on the information symbol from the accumulation result provided by the coherent accumulator.

13. A method for receiving, with time tracking, a pulsed UWB signal, the pulsed UWB signal comprising pulses following each other with a first repetition period ($T_c$), modulated at a carrier frequency, said pulsed UWB signal being further modulated for transmitting information symbols, each information symbol being transmitted over a time-symbol ($RLT_c$) during which the information symbol is repeated a plurality ($R$) of times, said method comprising:

- a step of quadrature mixing for translating in baseband said pulsed UWB signal using a translation frequency, equal, within one offset, to said carrier frequency;
- a step of integrating the signal thus translated in baseband, during selected time windows, each selected time window being repeated with a second period ($T_1$);
- a sampling step for sampling the integration results on said time windows and providing a complex sample for each of them;
- a demodulating/detecting step for estimating said information symbols from the complex samples thus obtained;

said method being further **characterized by**:

- a phase estimating step estimating, at each time-symbol, the phase of the complex samples, free of the modulation due to the information symbols thus estimated;
- following up the phase rotation for following up on the one hand the rotation of the phase thus estimated from a reference instant and on the other hand a rotation of a phase already compensated from the same instant, and deducing therefrom a non-compensated phase rotation;
- a step of controlling the time windows applying a time offset to said time windows to compensate for at least one part of said non-compensated phase rotation.

14. The receiving method with time tracking according to claim 13, **characterized in that** each time-symbol contains a plurality of modulation symbols associated with the information symbol transmitted over this time-symbol, each modulation symbol being spread using a spread code with a length $L \geq 1$ to provide a coded sequence, each chip of the coded sequence modulating a pulse of the UWB signal, said method further comprising a correlating step correlating the complex samples with the spread code before providing them to the demodulating/detecting step and the phase estimating step.

Fig. 1A

Fig. 1B

Fig. 2

séquence d'impulsions codées

séquence de codage: +1,+1,-1,-1 $\longrightarrow$

$T_c$

symboles d'information: 1     0     1     1

répétition de facteur R: 1 1 1   0 0 0   1 1 1   1 1 1

symboles de modulation: $-1$ $+1$ $-1$   $-1$ $-1$ $-1$   $+1$ $-1$ $+1$   $-1$ $+1$ $-1$

signal transmis:

super-séquences: $RLT_c$    $RLT_c$    $RLT_c$    $RLT_c$

**Fig. 3**

EP 2 958 245 B1

**Fig. 4**

EP 2 958 245 B1

**Fig. 5**

**Fig. 7**

610

$\tilde{r}(i)$
480

COH
RAKE

$h_p^*$

620

COH
ACCU

$z$

630

$\hat{\varphi}$

492

**Fig. 6**

$\hat{b}$

DBPSK

$R$

660

650

491

810

$\tilde{r}(i)$
480

$\tilde{r}_i \tilde{r}_{i-1}^*$

820

INCOH
RAKE

$|h_p|^2$

830

COH
ACCU

840

$\hat{b}$

**Fig. 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040136468 A
- FR 2996970 A1
- WO 2008063132 A1

**Littérature non-brevet citée dans la description**

- **DE F. SALEM et al.** Synchronization using an adaptive early-late algorithm for IR-TH-UWB transmission in multipath scénarios. *Proc. of ISWCS,* 07 Septembre 2005, 267-271
- Low power beamforming RF architecture enabling fine ranging and AOA techniques. **BAUTISTA F et al.** ULTRA-WIDEBAND (ICUWB), 2011 IEEE INTERNATIONAL CONFERENCE ON. IEEE, 585-589